# EUROPEAN PATENT APPLICATION

(11) **EP 1 162 158 A2**
(43) Date of publication of application: **12.12.2001**
(21) Application number: 01305012.5
(22) Date of filing: 08.06.2001
(51) Int. Cl.: B65D 90/04

(54) **Method of installing a tank liner**

(30) Priority: 09.06.2000 CA 2311229
(71) Applicant: Mocoat Services'98 Limited, Nisku, Alberta T9E 7P9 (CA)
(72) Inventor: Heath, Brian, Edmonton, Alberta T6G 2L4 (CA)
(74) Representative: Robinson, Ian Michael

(57) **Abstract**

A method of installing a tank liner in a tank, the method comprising the steps of: A) adhering a backing sheet to a liquid permeable sheet with an adhesive to form a first panel outside of the tank; B) placing the first panel within the tank against a wall of the tank, with the liquid permeable sheet between the tank wall and the backing sheet; and C) laying up fiber reinforced plastic onto the backing sheet inside of the tank to create a tank liner inside the tank. A tank liner formed of plural panels sealed together to form an encircling wall and an end wall, each panel comprising: a liquid permeable sheet; a fabric sheet adhered to the liquid permeable mesh sheet on one side of the fabric; and fiber reinforced plastic applied to the other side of the fabric.

## Description

This invention relates to containment devices, and particularly a tank liner.

Storage tanks are frequently used to store liquids such as hydrocarbons, corrosive chemicals, produced water, and other fluids used in the treatment of water and sewage and other industries. These tanks may leak and cause an environmental hazard. It is thus generally known to be desirable to provide secondary containment systems where the tank is either provided with a jacket or an inner liner. In the case of the jacket, the tank remains the primary containment, while the jacket is the secondary containment. In the case of the tank liner, the tank becomes the secondary containment while the tank liner is the primary containment.

Between the primary containment and the secondary containment there is typically an interstitial space that requires monitoring for leaks. Various methods of monitoring an interstitial space are well known in the art. They include devices as simple as sight tubes attached to the side of tanks, check valves attached to the side of tanks, to various electronic devices which can detect by the presence of chemicals, or odours, or analysis of liquids, leaks in the primary containment into an interstitial space.

The tank liner or jacket must have sufficient chemical resistance and physical strength to contain the liquid or solid to be held. While several primary and secondary containment devices exist for installation into existing tanks, such as those described in United States patent no. 5,904,265 of Zandbergen et al and 4,825,687 of Sharp, the inventor considers them difficult to install. Qualitron of Edmonton, Canada, proposed and installed systems in 1999 which included a pre-fabricated composite structure made of an interstitial mesh layer, an elastomeric layer bonded to the mesh layer, a surface treated polypropylene fabric substrate on top of the elastomeric layer and a top coat of epoxy. This system was deficient in failing to provide sufficient strength against bending stresses when the pre-fabricated strips were installed in the tank.

The proposed invention seeks to overcome the problems of the prior art.

Therefore, according to a first aspect of the invention, there is provided a method of installing a tank liner in a tank, the method comprising the steps of:
A) adhering a backing sheet to a liquid permeable sheet with an adhesive to form a first panel outside of the tank;
B) placing the first panel within the tank against a wall of the tank, with the liquid permeable sheet between the tank wall and the backing sheet; and
C) laying up fiber reinforced plastic onto the backing sheet inside of the tank to create a tank liner inside the tank.

According to a further aspect of the invention, there is provided a tank liner formed of plural panels sealed together to form an encircling wall and a bottom wall, each panel comprising:
a liquid permeable sheet;
a fabric sheet adhered to the liquid permeable mesh sheet on one side of the fabric sheet; and
fiber reinforced plastic applied to the other side of the fabric.

According to an aspect of the invention, the panels are sealed together to form an encircling wall and an end wall. Putty may be used to seal the panels together, including along the corner formed where the encircling wall meets the end wall. The panels may be adhered to the walls by exposing part of the mesh and applying putty to the exposed portions. A tank made according to the method is also claimed.

There will now be described preferred embodiments of the invention with reference to the figures, by way of example only and without intending to limit the generality of the invention, in which like reference characters denote like elements, and in which:

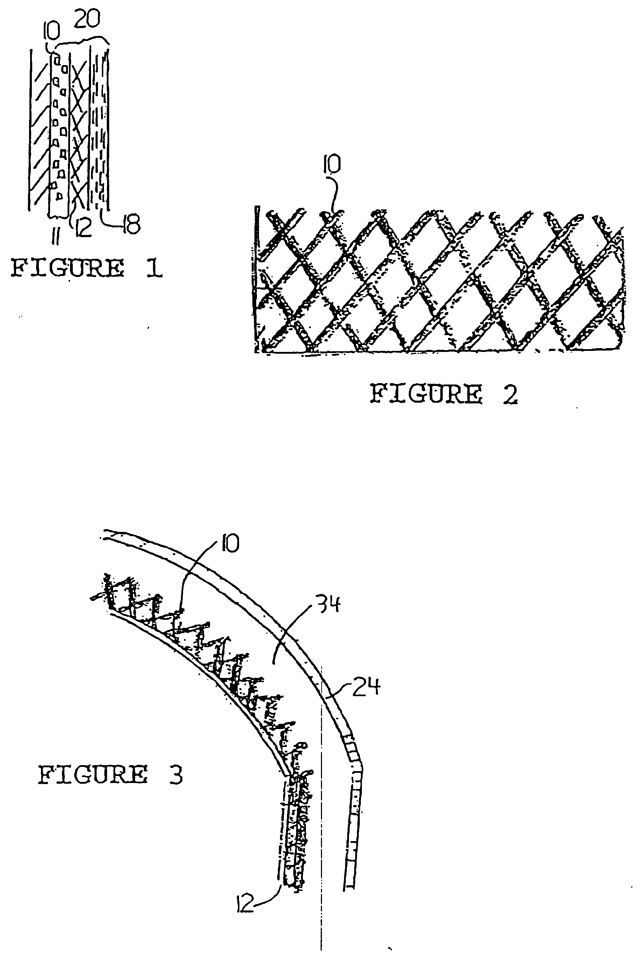

Figure 1 is a cross-section of a fiber reinforced panel formed according to the invention (not to scale, layer 18 is generally thicker than layer 12;
Figure 2 is a plan view of a grid for use as a permeable layer according to the invention;
Figure 3 is a perspective view of a panel according to the invention;
Figure 4 is a cross-section of a joint between two panels meeting at a corner of a tank; and
Figure 5 is a plan view of two panels with exposed grid to allow adhering of the panels to the tank wall by applying adhesive to the exposed grid.

Generally, to make a tank liner, a panel 11 is made by adhering a backing sheet 12 to a liquid permeable sheet 10 with an adhesive outside of the tank 24. The panel 11 is then placed within the tank against a wall 24 of the tank, with the liquid permeable sheet 10 between the backing sheet 12 and the wall 24. Next, fiber reinforced plastic 18 is laid up onto the backing sheet 12 inside of the tank 24 to create a tank liner 20.

The liquid permeable sheet 10 is preferably a mesh sheet 10 made of organic material such as polypropylene. The backing sheet 12 is preferably a fabric made of organic material, preferably polypropylene. The sheets 10 and 12 are preferably adhered together with a suitable adhesive resin system.

A mesh is distinguished from a liquid impermeable sheet by having sufficient open pores that liquid may pass through the mesh even after a resin is applied to the mesh to adhere it to an adjacent sheet. By contrast, a liquid impermeable sheet or coated fabric sheet as used herein has a sufficient density of fiber that the liquid impermeable sheet, or the fabric when the fabric is coated with an adhesive resin system, is essentially impermeable to liquids such as hydrocarbon liquids and water.

The mesh sheet 10 may be made of solid organic material such as polyolefin, polyester, polyamide, aramid, polyvinyl chloride, or polystyrene material. The preferred material for the mesh 10 is surface treated extruded polypropylene mesh. A preferred mesh is a polypropylene bi-planar mesh available from Atlantic Extrusions of Massachusetts, USA. Polyester sheets may also be used. Polyethylene sheets are not desirable. The mesh 10 may be made of woven or non-woven fibres or it may be made by a process well known in the art to produce a grid, often used in geo-technical applications and known in the trade as a geo-grid, as for example available from Tensar Inc. of New Jersey and other manufacturers.

Fabric sheets may be made of solid strips of polyolefin, polyester, polyamide, aramid, polyvinyl chloride, or polystyrene material. The preferred material for the fabric sheets is surface treated non-woven polypropylene fabric 8400 S2 available from Albarrie Environmental Services of Barrie, Ontario, Canada. The strips may be made of woven or nonwoven fibre, whose cross-sectional dimensions are close to each other, or may be made from a sheet, in which one cross-sectional dimension is much larger than the other. If a fiber is used, it should have a length at least 0.25 cm, and a cross-sectional width in the order of 0.1 cm or less. A strip may be made of multiple fibers or sheets. Solid sheets of the same material may also be used. It is preferred that the fabric sheet be initially semi-permeable, and then become impermeable after application of the fiber reinforced plastic 18. The fabric is used to form a platform or substrate for receiving the fiber reinforced plastic 18.

The material used for the mesh 10 and also the material used for the fabric sheet 14 should have a surface energy at least 10 dynes/cm at 20°C less than the surface tension of the resin system, and preferably have a surface energy greater than 40 dynes/cm at 20°C. If necessary the material may need to be surface treated to yield these criteria. Methods of surface treatment are in themselves well known in the art, and include exposure to reactive gas atmospheres containing F₂, Cl₂, SO₃, or O₃; exposure to oxidative liquids such as nitric acid, sulphuric acid, chromic acid, or H₂O₂; or other process such as electrostatic discharge, corona discharge, plasma exposure or flame treatment. Other examples are disclosed in United States Patent No. 4,880,879.

The panel 11 is prepared by lying the fabric 12 on a suitable surface, applying a suitable adhesive resin system to the fabric 12 and laying the mesh 10 on the fabric 12 or turning the fabric over and laying it on the mesh 10, depending on which is more convenient to the manufacturer. The adhesive resin system is preferably Superior Environmental Technologies, Inc. SP-2000Q. Pressure is applied to assure a continuous bond between the two sheets 10, 12 and the resin system is allowed to cure. The adhesive resin system is preferably a thermosetting resin system having a sufficiently low surface tension to provide a high level of bonding. Examples of suitable resins systems include thermosetting epoxies, polyurethane, unsaturated polyester, unsaturated vinyl ester, polydicyclopentadiene, acrylic latex, rubber latex, polysulfide, polyurea, novolacs, and phenolics.

Panels 11 of the flexible mesh-fabric composite are then cut to the appropriate size for the application and may be rolled up to a size allowing them to be inserted into the man-way hatch of a tank. Prior to installation provisions are made to clean the tank wall surface and to provide an interstitial space monitoring device, various of which are known in the art.

Fabric at edges 22 of the panels 11 is stripped away to expose the mesh 10 along the edges of the panels 11. The panels 11 are applied to the inside of the tank by suspending them vertically from the top of the tank, or by stacking them circumferentially within the tank. Double sided tape may be used to suspend the panels 11 in the tank long enough (about 24 hours) for the installation of the panels 11 to be completed. The panels 11 are glued into place with the mesh 10 against the wall 24 of the tank by applying putty to the exposed mesh 10 at the edges of the panels 11, including along the top of the topmost panels. The system is structurally supported by the direct adhesion of the panels to the tank wall along the joints between the panels, as well along the upper edges of the topmost panels. Putty is a mastic material made up of adhesive resin and filler. Filler may be short fibers of polyethylene that have been treated to have a surface energy greater than 70 dynes/cm at 20°C or other suitable filler. The filler is mixed with a suitable resin such as the resin system used to provide the chemically resistant coating to the fabric 12. Other glue like materials could be used as appropriate to requirements. The putty is allowed to cure and then the fiber reinforced plastic 18 is laid up onto the panels 11 in conventional fashion to form a continuous inner tank liner that provides the primary containment of the liquid being stored. The original tank of vessel then becomes the secondary containment structure.

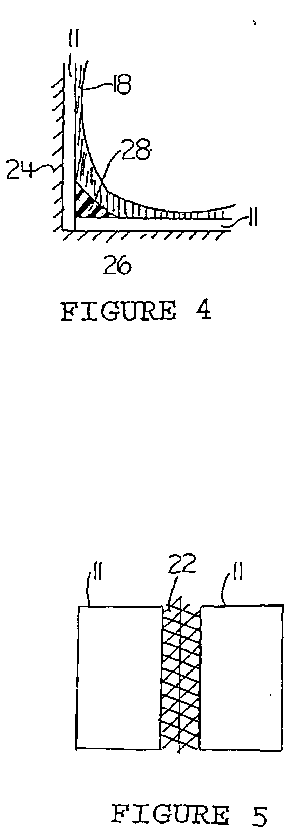

As shown in Figure 4, a vertical tank will typically have an encircling wall 24 and an end or bottom wall 26. In a horizontal tank, the relative positions of the encircling wall and the end wall are interchanged as shown in the figure. The encircling wall 24 meets the bottom wall 26 at a corner. One panel 11 is placed against the encircling wall 24, and another panel 11 is placed against the bottom wall 26, with the two panels 11 forming a joint at the corner. As many panels 11 are used as are required to cover the bottom wall 26 and encircling wall 24 up to the required height. A bead of putty 28 is then laid along the joint at the corner and along all other joints between adjacent panels, preferably thicker at corners between panels. The fiber reinforced plastic 18 is then laid up over all of the panels 11 including over the beads of putty at the joints where two panels join, including where the encircling wall 24 meets the bottom wall 26.

The bonded fabric and mesh sheets create a tank liner, with the mesh 10 creating a stand-off space between the fabric and tank wall 24. This stand-off is such that an interstitial space 34 is created between the fabric sheet 12 and the wall 24 which is adjacent to the mesh 10. The interstitial space 34 provided by the panel 11 may be monitored by a conventional monitor to assure no leakage in the primary storage device and assure the integrity of the primary containment structure.

Various fiber reinforced plastics (FRP) are well known in the art. Various fabrics (including woven fibre, unidirectional fiber, and roving fiber) such as fiberglass, carbon fiber, basalt fiber, ceramic fiber, metal filament, aramid fiber, and others may be combined by techniques well known in the art with various resin systems to create composites of varying strength, flexibility and durability. Preferably, glass fiber mats are used, which are laid up in two layers. Preferred resins are unsaturated polyester, unsaturated vinyl ester and thermosetting epoxy.

In some applications, it may be important to make the mesh 10 more thermally stable, as for example in heated tanks. For that purpose, filler such as talc may be added to the polypropylene forming the mesh to reduce thermal expansion. At higher operational temperatures, epoxies may be more suitable as the resin, such as ICI coatings, or Dupont fluoropolymers may be more suitable as the resin.

The putty 28 may extend down into a gap between two panels 11, as for example in Figure 4 adjacent the joint between the encircling wall 24 and bottom wall 26, and extend through to contact the walls 24, 26, thus acting as an anchor for the panels. The gap may be for example 1 cm to 2 cm wide to assist in securing the panels.

Immaterial modifications may be made to the invention described here without departing from the essence of the invention.

## Claims

1. A method of installing a tank liner in a tank, the method comprising the steps of:
A) adhering a backing sheet to a liquid permeable sheet with an adhesive to form a first panel outside of the tank;
B) placing the first panel within the tank against a wall of the tank, with the liquid permeable sheet between the tank wall and the backing sheet; and
C) laying up fiber reinforced plastic onto the backing sheet inside of the tank to create a tank liner inside the tank.

2. The method of claim 1 in which the backing sheet is initially semi-permeable and is made impermeable by application of adhesive.

3. The method of claim 1 or 2 in which the backing sheet is a fabric.

4. The method of claim 1, 2 or 3 in which the liquid permeable sheet is a mesh.

5. The method of any one of the preceding claims in which the tank comprises an encircling wall and an end wall and the method further comprising:
repeating steps A and B until at least a lower portion of the encircling wall and end wall are covered with the multiple panels;
sealing the panels together to form the tank liner; and
applying step C to the multiple panels.

6. The method of any one of the preceding claims in which at least one of the edges of the liquid permeable sheet is exposed when the first panel is placed against a wall of the tank, and further comprising, before laying up the fiber reinforced plastic, adhering the first panel to the wall of the tank by applying adhesive to the exposed edge of the liquid permeable sheet.

7. A tank liner formed of plural panels sealed together to form an encircling wall and an end wall, each panel comprising:
a liquid permeable sheet;
a fabric sheet adhered to the liquid permeable mesh sheet on one side of the fabric sheet; and
fiber reinforced plastic applied to the other side of the fabric.

8. The tank liner of claim 7 in which the liquid permeable sheet is a mesh.

9. A tank liner made according to any one of claims 1-6.
